# EUROPÄISCHE PATENTSCHRIFT

(11) **EP 3 021 085 B1**
(45) Veröffentlichungstag und Bekanntmachung des Hinweises auf die Patenterteilung: **14.03.2018**
(21) Anmeldenummer: 15194433.7
(22) Anmeldetag: 13.11.2015
(51) Int. Cl.: G01C 21/00

(54) **STARTEN VON DATENDIENSTEN EINER NAVIGATIONSEINRICHTUNG EINES FAHRZEUGS**
STARTING OF DATA SERVICES OF A NAVIGATION DEVICE OF A VEHICLE
DEMARRAGE DE SERVICES DE DONNEES D'UN DISPOSITIF DE NAVIGATION D'UN VEHICULE

(30) Priorität: 13.11.2014 DE 102014016842
(43) Veröffentlichungstag der Anmeldung: 18.05.2016
(73) Patentinhaber: Preh Car Connect GmbH, 01156 Dresden (DE)
(72) Erfinder: Kolanko, Dipl.-Inform. (FH) Jan, 01157 Dresden (DE)

(56) Entgegenhaltungen:
- WO-A1-2008/029866
- WO-A1-2008/083983
- US-A- 5 860 001
- US-A1- 2005 204 198
- US-A1- 2009 193 246

## Beschreibung

Die Erfindung betrifft ein Verfahren zum Starten von Datendiensten einer Navigationseinrichtung eines Fahrzeugs und eine Navigationseinrichtung zum Ausführen des Verfahrens.

Ein solches Fahrzeug kann ein Kraftfahrzeug sein, wie ein Personenkraftwagen, ein Lastkraftwagen, ein Omnibus, ein Motorrad oder ein Elektrofahrrad (auch als Pedelec bekannt). Als ein solches Fahrzeug kommt aber auch ein schienengebundenes Fahrzeug, wie eine Lokomotive, ein wassergebundenes Fahrzeug, wie ein Boot oder ein Schiff, oder ein luftfahrttaugliches Fahrzeug, wie ein Motorschirm, ein Motorsegler oder ein Flugzeug, in Frage.

Herkömmliche Navigationseinrichtungen helfen einem Nutzer bei der Wegfindung zu einem gewünschten Ziel. Dazu berechnen die Navigationseinrichtungen unter Verwendung von historischen oder aktuellen Daten Routen und führen darauf basierende Zielführungen durch. Ferner können die Navigationseinrichtungen eine zuletzt gestartete und noch nicht beendete Zielführung fortsetzen.

Unter einer Navigationseinrichtung kann eine Vorrichtung verstanden werden, die einem Nutzer Informationen über eine Position eines Fahrzeugs, mit welchem die Vorrichtung verbunden ist, bereitstellt. Ferner kann unter einer Navigationseinrichtung eine Vorrichtung verstanden werden, mit der ein Nutzer eine Route, zum Beispiel von einem ersten Ort zu einem weiteren Ort, berechnen lassen und eine Zielführung ausgeben lassen kann.

Eine Navigationseinrichtung kann mit einem Fahrzeug derart verbunden sein, dass die Navigationseinrichtung in oder an dem Fahrzeug fest angebracht ist, zum Beispiel am Fahrzeug angebaut ist oder im Fahrzeug eingebaut ist. Alternativ dazu kann eine Navigationseinrichtung einfach von einem Fahrzeug abnehmbar sein oder einfach aus dem Fahrzeuginneren entnehmbar sein, beispielsweise als tragbares Gerät.

Ferner kann eine Navigationseinrichtung unter Verwendung elektronischer Schnittstellen mit einem Fahrzeug verbunden sein. Die Schnittstellen können kabelgebunden oder drahtlos sein, zum Beispiel in Form von Bluetooth-Schnittstellen oder WLAN (wireless area network)-Schnittstellen. Über eine solche Schnittstelle kann die Navigationseinrichtung Fahrzeugdaten empfangen, zum Beispiel Radumdrehungszahlen oder Gierraten.

Eine herkömmliche Navigationseinrichtung kann unter Verwendung von Landkartendaten eine Route berechnen, welche von einer Position der Navigationseinrichtung zu einer Zielposition führt. Die Position der Navigationseinrichtung wird meist unter Verwendung eines Satellitennavigationssystems bestimmt, zum Beispiel unter Verwendung von GPS, GLONASS, COMPASS oder GALILEO. Dazu empfängt die Navigationseinrichtung mit Hilfe einer Satellitenantenne die Signale mehrerer geostationärer Satelliten und wertet diese Signale aus. Die Zielposition wird in der Regel aus einem Ziel bestimmt, das ein Nutzer unter Verwendung einer Eingabeeinheit in die Navigationseinrichtung eingibt.

Die Route kann mittels einer Recheneinheit der Navigationseinrichtung berechnet werden, welche einen Routenberechnungsalgorithmus ausführt. Bei der Routenberechnung werden Landkartendaten verwendet, welche Objekte und den Objekten zugeordnete Informationen repräsentieren, zum Beispiel Straßen, Wege, Plätze, Eisenbahnlinien, Flüsse, Gebäude, Brücken, Geländeformen, Landesgrenzen, Parkmöglichkeiten, Raststätten, Verkehrsregelungen, Ortschaften und Geschwindigkeitsbegrenzungen. Die Landkartendaten sind in der Regel in einer nichtflüchtigen Speichereinheit der Navigationseinrichtung abgelegt, beispielsweise auf einer CD-ROM, auf einer Festplatte oder in einem Flash-Speicher.

Die Route oder ein Abschnitt der Route kann auf einer der Navigationseinrichtung zugeordneten Ausgabeeinheit, zum Beispiel einem Bildschirm, angezeigt werden. Dadurch kann der Nutzer der Navigationseinrichtung eine räumliche Vorstellung von der Route oder von einem vor ihm liegenden Routenabschnitt entwickeln, was ihm zum Beispiel ermöglicht, Fahrmanöver vorausschauend zu planen.

Ferner kann nach der Routenberechnung eine Zielführung gestartet werden. Als Zielführung wird ein Prozess bezeichnet, der einen Nutzer der Navigationseinrichtung entlang der berechneten Route leitet. Während der Zielführung kann die Navigationseinrichtung optische und akustische Fahranweisungen an den Nutzer ausgeben, die anhand der Route und von aktuellen Positionen der Navigationseinrichtung generiert werden.

Sowohl eine Routenberechnung als auch eine Zielführung werden im Folgenden jeweils als ein Navigationsvorgang bezeichnet.

Der Nutzer erwartet, dass eine Navigationseinrichtung bei Bedarf kurzfristig einsatzbereit ist. Daher soll das Initialisieren bzw. Starten einer Navigationseinrichtung wenig Zeit benötigen, d.h. die Navigationseinrichtung soll schnell aufstarten. Die immer komplexer werdenden Funktionsumfänge von Navigationseinrichtungen führen jedoch dazu, dass gegenwärtig auch mit aktueller Hardware ein hoher Zeitbedarf für das Initialisieren besteht, da beim gleichzeitigen Ausführen von verschiedenen Aufgaben und Prozessen Performanzengpässe auftreten.

Herkömmliche Navigationseinrichtungen booten beim Initialisieren zunächst und laden und starten anschließend eine Mehrzahl von Datendiensten. Unter einem Datendienst wird hierin eine Softwareanwendung und/oder ein Computerprogramm verstanden, die bzw. das unter Zuhilfenahme einer Recheneinheit einer Navigationseinrichtung ausgeführt wird und das Empfangen von Daten von außerhalb der Navigationseinrichtung steuert.

Das Laden und Starten der Datendienste erfolgt unabhängig davon, ob jeder der geladenen und gestarteten Datendienste zu Beginn eines Navigationsvorgangs tatsächlich benötigt wird oder den Interessen des Nutzers entspricht. Jeder Datendienst benötigt beim Laden und Starten Ressourcen, wobei das Binden dieser Ressourcen den Start weiterer Datendienste verzögert.

Ressourcen im Sinne dieser Anmeldung stellen Funktionsmodule, wie Recheneinheiten, Speichereinheiten, Schnittstelleneinheiten und Empfangseinheiten dar. Ein Funktionsmodul ist als eine Baugruppe aufzufassen, die zum Ausführen einer Funktion oder mehrerer Funktionen der Navigationseinrichtung dient. Neben der Recheneinheit können weitere Funktionsmodule verwendet werden, welche in der Navigationseinrichtung und/oder im Fahrzeug (nicht gezeigt) angeordnet sind.

Ein Funktionsmodul weist bestimmte Eigenschaften auf. Zum Beispiel weist die Recheneinheit eine Rechenleistung und eine Arbeitsspeichergröße auf, eine Speichereinheit weist eine Lesegeschwindigkeit und eine Schreibgeschwindigkeit auf, eine Schnittstelleneinheit weist eine Bandbreite auf und eine Empfangseinheit weist eine Empfangsleistung auf.

Die beschriebene Verzögerung des Starts weiterer Datendienste kann dazu führen, dass die in einem Fahrzeug eingesetzte Navigationseinrichtung Informationen, welche ein Nutzer aufgrund einer ganz bestimmten Situation bei Fahrtbeginn benötigt, nicht rechtzeitig an den Nutzer ausgeben kann. Die Navigationseinrichtung agiert daher nicht gemäß den Interessen des Nutzers, was zu einer Unzufriedenheit des Nutzers führen kann.

Der Begriff "Situation" beschreibt Zustände und Umstände, die bezogen auf das Fahrzeug vorliegen können. Ein Zustand des Fahrzeugs ist zum Beispiel die Anzahl von Personen im Fahrzeug, die Anzahl belegter Sitzplätze, die Masse und/oder das Volumen zugeladenen Gepäcks, das Vorhandensein eines Anhängers oder das Vorhandensein eines Dachgepäckträgers. Ein Umstand ist zum Beispiel das Vorhandensein eines mobilen Kommunikations- und Medienwiedergabegeräts, eine bestimmte Tageszeit und/oder ein bestimmter Wochentag oder das Vorliegen eines Fahrzeugschlüssels mit einer bestimmten Identifikation.

Eine Situation kann darin bestehen, dass sich eine bestimmte Anzahl von Personen im Fahrzeug befindet, wobei die Rücksitzbank mit einer Person belegt ist. Eine weitere Situation kann vorliegen, wenn sich ein personalisierter Fahrzeugschlüssel an einem Montag um 8 Uhr im oder am Fahrzeug befindet.

WO 2008/083 983 A1 beschreibt ein Navigationsgerät in einem Fahrzeug, das nach dem Einschalten eine mobile Netzwerkverbindung mit einem Server aufbauen kann, so dass Informationen vom dem Server bezogen werden, die potentielle Verzögerungen entlang einer Route des Fahrzeugs betreffen.

Ferner offenbart US 2009/193 246 A1 eine Datenverarbeitungseinrichtung mit mehreren logischen Laufwerken, wobei für jedes logische Laufwerk eine Prioritätsstufe bestimmt wird, die auf einer Zugriffshäufigkeit automatisch gestarteter Anwendungsprogramme bei einem vorigen Start der Datenverarbeitungseinrichtung basiert.

Weiterhin beschreibt US 5 860 001 A ein Computersystem mit zwei verschiedenen Bootsequenzen, die jeweils von einem Nutzer in Abhängigkeit davon ausgewählt werden können, wie das Computersystem eingeschaltet wird.

Die Aufgabe der Erfindung besteht darin, das oben erwähnte Problem zu lösen, so dass eine Navigationseinrichtung eines Fahrzeugs Informationen, welche ein Nutzer des Fahrzeugs zu Beginn einer Fahrt aufgrund einer bestimmten Situation benötigt, rechtzeitig an den Nutzer ausgeben kann.

Die Aufgabe wird mit dem erfindungsgemäßen Verfahren zum Starten von Datendiensten einer Navigationseinrichtung eines Fahrzeugs gemäß Anspruch 1 gelöst.

Mit dem in Anspruch 1 beschriebenen Zuweisen der ersten Startreihenfolge zu der ersten Situation wird die Voraussetzung dafür geschaffen, die Datendienste in der ersten Startreihenfolge zu starten, wenn nach dem Aktivieren der Navigationseinrichtung die erste Situation vorliegt.

Die erste Startreihenfolge kann derart gestaltet sein, dass diejenigen Datendienste zuerst gestartet werden, welche Informationen liefern, die der Nutzer in der ersten Situation zuerst benötigt. Dadurch lassen sich diese Informationen nach dem Aktivieren der Navigationseinrichtung rechtzeitig an den Nutzer ausgeben. Das passiert allerdings nur dann, wenn die Situation tatsächlich vorliegt, was mit dem Prüfen, ob die Situation vorliegt, sichergestellt wird.

Die Vorgehensweise gemäß Anspruch 1 bewirkt, dass von der Vielzahl von Datendiensten, über welche die Navigationseinrichtung verfügt und welche beim Aufstarten der Navigationseinrichtung Ressourcen beanspruchen, diejenigen Datendienste zuerst ausgeführt werden, die dem Nutzer situationsbedingt wichtig sind. Dies führt zu einer schnelleren Verfügbarkeit der Informationen, die der Nutzer bei Fahrtbeginn zu erhalten wünscht, und damit insgesamt zu einer besseren Zufriedenheit des Nutzers mit der Navigationseinrichtung.

Die Aufgabe wird außerdem mit einer Navigationseinrichtung eines Fahrzeugs gemäß Anspruch 10 gelöst.

Die Erfindung stellt folglich ein Verfahren und eine Navigationseinrichtung zum Ausführen des Verfahrens bereit. Eine Situation, in der sich das Fahrzeug befinden kann, wird mittels einer Anzahl von Situationsparametern definiert, welche die Situation kennzeichnen. Der definierten Situation wird eine Startreihenfolge zugewiesen, womit festlegt wird, in welcher Reihenfolge die Datendienste initialisiert und gestartet werden sollen. Die Recheneinheit priorisiert die Datendienste beim Aufstarten der Navigationseinrichtung entsprechend der zugewiesenen Startreihenfolge, so dass ein bestimmter Datendienst vor weiteren Datendiensten initialisiert und gestartet wird.

Die Erfindung gibt dem Nutzer die Möglichkeit, die Startreihenfolge der zu startenden Datendienste gemäß seinen persönlichen Vorlieben individuell einzustellen, wobei das Einstellen das Ändern einer vorgegebenen Startreihenfolge aufweisen kann.

Weitere Ausführungsformen der Erfindung sind in den abhängigen Patentansprüchen beschrieben.

Die Erfindung wird nun Bezug nehmend auf die folgenden Figuren näher erläutert:

Figur 1 zeigt ein Blockschema einer Navigationseinrichtung gemäß einer Ausführungsform der Erfindung.

Figur 2 zeigt ein Ablaufschema einer Ausführungsform des erfindungsgemäßen Verfahrens.

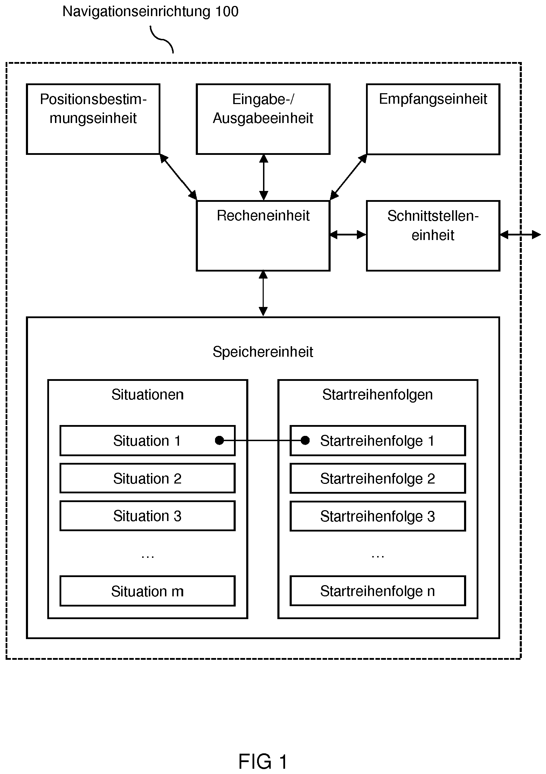

Im Folgenden wird auf Figur 1 Bezug genommen, die ein Blockschema einer Navigationseinrichtung 100 gemäß einer Ausführungsform der Erfindung zeigt. Die Navigationseinrichtung 100 ist in einem Fahrzeug (nicht gezeigt) fest eingebaut. Alternativ dazu ist es möglich, dass die Navigationseinrichtung 100 nur lose mit dem Fahrzeug verbunden ist, beispielsweise in dem Fahrzeug abgelegt ist.

Die Navigationseinrichtung 100 weist eine Positionsbestimmungseinheit, eine Eingabe- und Ausgabeeinheit, eine Empfangseinheit, eine Schnittstelleneinheit, eine Speichereinheit und eine Recheneinheit auf. Zusätzlich kann die Navigationseinrichtung 100 noch weitere Funktionsmodule (nicht gezeigt) aufweisen.

Die Positionsbestimmungseinheit kann Positionskoordinaten, welche eine geografische Position der Navigationseinrichtung 100 repräsentieren, gewinnen. Dazu wertet die Positionsbestimmungseinheit Signale eines Satellitennavigationssystems aus, die die Positionsbestimmungseinheit mittels einer Satellitenantenne (nicht gezeigt) empfängt. Die Positionskoordinaten werden an die Recheneinheit übermittelt.

Die Eingabe- und Ausgabeeinheit stellt die Schnittstelle zwischen einem Nutzer der Navigationseinrichtung 100 und der Navigationseinrichtung 100 dar. Der Nutzer kann eine Eingabe mittels Sprache oder mittels einer Bedienvorrichtung, wie einer Taste und/oder einer berührungsempfindlichen Anzeige, vornehmen. Die Ausgabe kann in Form eines akustischen Signals, über eine Anzeige, zum Beispiel in Form eines Bildschirms, oder mittels Projektion erfolgen. Die Eingabe- und Ausgabeeinheit kann einen Berührungsbildschirm (engl. touch screen) für die Eingabe und die Ausgabe von Daten aufweisen. In einer alternativen Ausführungsform verwendet die Eingabe- und Ausgabeeinheit für die Eingabe von Daten und die Ausgabe von Daten separate Komponenten, zum Beispiel einen Bildschirm und ein Tastenfeld.

Die Empfangseinheit kann ein Übertragungssignal, mit dem Daten übertragen werden, senden und empfangen. Das Übertragungssignal kann mittels einer physischen Leitung und/oder einer Schnittstelleneinheit ("kabelgebunden") übermittelt werden, zum Beispiel über eine Busverbindung. Alternativ dazu kann das Übertragungssignal unter Verwendung elektromagnetischer Wellen ("drahtlos") übertragen werden, wofür die Empfangseinheit mit einer Antenne (nicht gezeigt) verbunden ist. Insbesondere kann das Übertragungssignal über ein Peer-to-Peer-Netz oder über eine Client-Server-Struktur übertragen werden.

Die Schnittstelleneinheit ist dazu eingerichtet, zwischen der Recheneinheit und einem oder mehreren externen, außerhalb der Navigationseinrichtung 100 angeordneten Funktionsmodulen (nicht gezeigt) und/oder einem oder mehreren Fahrzeugmodulen Daten auszutauschen.

Ein Fahrzeugmodul ist hierin als eine Baugruppe aufzufassen, die zum Ausführen einer Funktion oder mehrerer Funktionen des Fahrzeugs dient. Ein Fahrzeugmodul ist zum Beispiel ein Steuergerät, ein Bordrechner (OCS; On-Board Computer System) oder eine Sensoranordnung. Ein Fahrzeugmodul kann außerdem als ein Fahrzeugbussystem, wie CAN (Controller Area Network), FlexRay, LIN (Local Interconnected Network), MOST (Media Oriented System Transport) oder Ethernet ausgebildet sein.

Die Speichereinheit weist einen nichtflüchtigen Speicher auf, zum Beispiel eine Festplatte, einen Festwertspeicher (ROM, Read Only Memory) und/oder einen Flash-Speicher. Alternativ dazu kann die Speichereinheit einen flüchtigen Speicher aufweisen, zum Beispiel einen Arbeitsspeicher und/oder einen Cache. Als eine weitere Alternative kann die Speichereinheit einen Speicher aufweisen, welcher eine Mischform aus einem nichtflüchtigen Speicher und einem flüchtigen Speicher darstellt, zum Beispiel eine Hybridfestplatte.

In der Speichereinheit können unter anderem Landkartendaten gespeichert werden. Darüber hinaus ist die Speichereinheit zum Speichern einer oder mehrerer Situationen, in welchen sich das Fahrzeug befinden kann, zum Speichern einer oder mehrerer Startreihenfolgen, in denen Datendienste der Navigationseinrichtung 100 gestartet werden können, und zum Speichern einer oder mehrerer Verknüpfungen zwischen einer Startreihenfolge und einer Situation eingerichtet.

In der Speichereinheit abgelegte Daten können mit einem Zeitstempel versehen sein, um mit weiteren Daten derselben Art hinsichtlich ihrer Aktualität vergleichbar zu sein.

Die Recheneinheit ist die zentrale Steuereinheit der Navigationseinrichtung 100. Sie weist einen Prozessor oder mehrere Prozessoren auf, die jeweils einen Prozessorkern oder mehrere Prozessorkerne enthalten. Die Recheneinheit weist außerdem einen Arbeitsspeicher (RAM, Random Access Memory) auf, welcher zum flüchtigen Speichern von Variablen und Zwischenergebnissen verwendbar ist.

Die Recheneinheit ist mit der Speichereinheit, der Schnittstelleneinheit, der Empfangseinheit, der Eingabe- und Ausgabeeinheit und der Positionsbestimmungseinheit über Datenverbindungen gekoppelt, die als Pfeile dargestellt sind. Die Recheneinheit ist zudem über die Schnittstelleneinheit mit einem oder mehreren weiteren, außerhalb der Navigationseinrichtung 100 angeordneten Funktionsmodulen (nicht gezeigt) und/oder einem oder mehreren Fahrzeugmodulen (nicht gezeigt) gekoppelt, zum Beispiel über eine Busverbindung.

Die Recheneinheit ist dazu eingerichtet, Befehle und/oder Daten zu verarbeiten. Unter anderem kann die Recheneinheit den Ablauf des erfindungsgemäßen Verfahrens steuern und dabei verschiedene Berechnungs- und Auswerteaufgaben erledigen, die noch erläutert werden.

Insbesondere ist die Recheneinheit dazu eingerichtet, zu prüfen, ob eine bestimmte Situation vorliegt und, wenn die Situation vorliegt, Datendienste in einer bestimmten Startreihenfolge zu starten, welche der Situation zugewiesen ist. Dazu wertet die Recheneinheit Fahrzeugdaten aus, die sie über die Schnittstelleneinheit erhält. Die Fahrzeugdaten kennzeichnen als Situationsparameter eine bestimmte Situation, in der sich das Fahrzeug befindet. Die Situationsparameter ermöglichen eine Differenzierung der Situation von anderen Situationen. Somit ist die Situation charakterisiert durch bestimmte Situationsparameter bzw. durch ein Schema bestimmter Situationsparameter.

Die Recheneinheit ist zum Erhalten der Situationsparameter unter Verwendung der Schnittstelleneinheit mit einem Fahrzeugbus gekoppelt. Somit sind der Recheneinheit zum Beispiel Situationsparameter zugänglich, die von einem Sender, zum Beispiel einem Sensor, zu einem Empfänger, zum Beispiel einem Steuergerät des Fahrzeugs, transportiert werden. Alternativ dazu kann die Recheneinheit zum Erhalten von Situationsparametern mit einem Funktionsmodul oder Fahrzeugmodul, zum Beispiel mit einer Sensoranordnung oder mit einem Steuergerät, direkt gekoppelt sein.

Die Situationsparameter betreffen beispielsweise:
▪ die Belegung einer Rücksitzbank bzw. eines Rücksitzes des Fahrzeugs,
▪ die Position, an der das Fahrzeug abgestellt ist,
▪ die Ausrichtung, in der das Fahrzeug abgestellt ist,
▪ die Beladung des Fahrzeugs,
▪ das Vorhandensein eines personalisierten Fahrzeugschlüssels, mit welchem das Fahrzeug geöffnet bzw. gestartet wird, oder
▪ das Vorhandensein eines mobilen Kommunikationsgeräts und/oder eines mobilen Medienwiedergabegeräts an Bord des Fahrzeugs, wie ein Mobiltelefon, ein MP3-Spieler, ein Funkkopfhörer, ein tragbarer Personal Computer oder eine tragbare Spielkonsole.

Bei einer anderen Ausführungsform der Erfindung ist die Recheneinheit dazu eingerichtet, bei Bedarf eine Startreihenfolge zu löschen, die in der Speichereinheit gespeichert ist, oder die Navigationseinrichtung auf Werkseinstellungen zurückzusetzen.

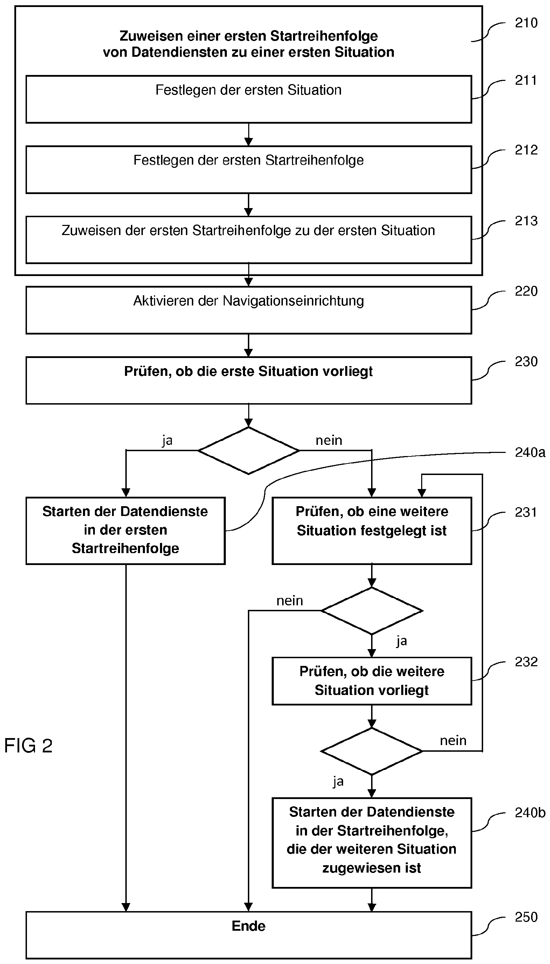

Im Folgenden wird eine beispielhafte Ausführungsform des erfindungsgemäßen Verfahrens unter Bezugnahme auf die Figuren 1 und 2 beschrieben. Das Verfahren wird mit der in Figur 1 dargestellten Navigationseinrichtung 100 ausgeführt.

Bei einem ersten Verfahrensschritt 210 wird eine erste Startreihenfolge, in der Datendienste der Navigationseinrichtung 100 gestartet werden können, einer ersten Situation, in welcher sich das Fahrzeug befinden kann, zugewiesen.

Dazu wird bei einem ersten Teilschritt 211 die erste Situation festgelegt, indem ein Situationsparameter bestimmt wird, welcher die erste Situation kennzeichnet. Die erste Situation wird somit durch ein erstes Situationsparameterschema definiert, das den Situationsparameter aufweist. Alternativ dazu ist die erste Situation durch mehrere Situationsparameter gekennzeichnet, die ein erstes Situationsparameterschema bilden. Als eine weitere Alternative wird die erste Situation festgelegt, indem sie aus einer Mehrzahl von Situationen ausgewählt wird, die vorher definiert wurden.

Im vorliegenden Beispiel besteht die erste Situation darin, dass eine Rücksitzbank im Fahrzeug mit mindestens einer Person belegt ist. Der Situationsparameter, der die Situation charakterisiert, heißt somit "Rücksitzbank belegt". Folglich weist das Situationsparameterschema der ersten Situation den Situationsparameter "Rücksitzbank belegt" auf.

Ob die erste Situation vorliegt, wird unter Verwendung von Sitzbelegungssensoren der Rücksitzbank erfasst. Deren Sensorsignale werden an ein Steuergerät des Fahrzeugs übertragen. Das Steuergerät wertet die Sensorsignale aus. Da die Rücksitzbank mit einer Person belegt ist, erzeugt das Steuergerät den Situationsparameter "Rücksitzbank belegt" und sendet ihn über den Fahrzeugbus u.a. an die Recheneinheit. Die Recheneinheit erhält den Situationsparameter "Rücksitzbank belegt" über ihre Schnittstelleneinheit.

Alternativ dazu kann der Situationsparameter "Rücksitzbank belegt" auf einem Sensorsignal basieren, das von einem Gurtschlosssensor bereitgestellt wird. In diesem Fall wird der Situationsparameter "Rücksitzbank belegt" erzeugt, wenn ein Sicherheitsgurt der Rücksitzbank in eine Gurtbefestigungseinheit eingesteckt wurde.

Als eine weitere Alternative kann die erste Situation durch eine Kombination oder logische Verknüpfung von Situationsparametern gekennzeichnet sein. Beispielweise zeigt ein Drucksensor eine Belegung der Rücksitzbank an und ein Gurterkennungssensor zeigt ein Einstecken des Sicherheitsgurts der Rücksitzbank in der Gurtbefestigungseinheit an. Somit wird eine Belegung der Rücksitzbank mit einer Person erfasst, wobei ein Belegen der Rücksitzbank mit einem schweren Gegenstand ausgeschlossen wird.

Eine andere in der Speichereinheit gespeicherte Situation besteht darin, dass ein Nutzer das Fahrzeug an einem Montag nach 8 Uhr mit seinem Fahrzeugschlüssel öffnet. In diesem Fall handelt es sich bei den Situationsparametern um eine bestimmte Tageszeit, einen bestimmten Wochentag und das Vorhandensein eines bestimmten Fahrzeugschlüssels im oder am Fahrzeug.

Eine weitere in der Speichereinheit gespeicherte Situation besteht darin, dass ein anderer Nutzer das Fahrzeug an einem Sonnabend nach 21 Uhr bedient. Diese Situation weist die Situationsparameter "Wochenende", "nach 21 Uhr", "Kopplung eines Mobiltelefons des anderen Nutzers" und/oder "Einstellung des Fahrersitzes für den anderen Nutzer" auf.

Eine weitere in der Speichereinheit gespeicherte Situation besteht darin, dass das Fahrzeug zu Hause in der Einfahrt abgestellt ist. Diese Situation weist den Situationsparameter "Position und Ausrichtung des Fahrzeugs zu Hause" auf.

Eine weitere in der Speichereinheit gespeicherte Situation besteht darin, dass das Fahrzeug für eine Rückfahrt von einem Urlaubsort bereitsteht. Diese Situation weist die Situationsparameter "Zuladung entspricht der Zuladung einer Urlaubsfahrt in der Vergangenheit" und "Entfernung von zu Hause überschreitet einen vorgegebenen Wert" auf.

Eine weitere in der Speichereinheit gespeicherte Situation besteht darin, dass sich zwei Mobiltelefone im Fahrzeug befinden. Diese Situation weist die Situationsparameter "Mobiltelefon A im Fahrzeug" und "Mobiltelefon B im Fahrzeug" auf.

Im vorliegenden Fall wird die erste Situation bereits bei der Entwicklung der Navigationseinrichtung 100 festgelegt und bei der Herstellung der Navigationseinrichtung 100 in der Speichereinheit abgelegt. Die erste Situation bzw. das erste Situationsparameterschema werden demnach als Werkseinstellung in der Navigationseinrichtung 100 gespeichert. Optional werden neben der ersten Situation noch weitere Situationen in der Speichereinheit abgelegt.

Bei einer anderen Ausführungsform der Erfindung wählt der Nutzer zum Festlegen der ersten Situation eine Situation aus mehreren Situationen aus, die in der Speichereinheit gespeichert sind.

Bei einer weiteren Ausführungsform der Erfindung legt der Nutzer die erste Situation fest, indem er zugehörige Situationsparameter definiert. Dazu ruft der Nutzer einen entsprechenden Dialog auf, welcher unter Verwendung der Eingabe- und Ausgabeeinheit ausgeführt wird.

Bei einem zweiten Teilschritt 212 wird eine erste Startreihenfolge festgelegt, in der die Datendienste der Navigationseinrichtung 100 gestartet werden können. Die erste Startreihenfolge kann in Form einer Liste dargestellt werden, in welcher die Datendienste gemäß ihrem Ladezeitpunkt bzw. Startzeitpunkt chronologisch in einer Reihenfolge aufgeführt sind, bezogen auf den Zeitpunkt des Aktivierens der Navigationseinrichtung 100.

Die als erste Startreihenfolge festgelegte Startreihenfolge weist folgende Datendienste auf:
(1) Datendienst zum Empfang eines Audiodatenstroms über ein Mobilfunknetz,
(2) Datendienst zum Empfang von Wettervorhersagen über Rundfunk,
(3) Datendienst zum Empfang von Verkehrsmeldungen über Rundfunk,
(4) Datendienst zum Empfang eines Audioprogramms über Rundfunk,
(5) Datendienst zum Empfang von Veranstaltungsinformationen über ein Mobilfunknetz und
(6) Datendienst zum Importieren eines Telefonbuchs aus einem im Fahrzeug befindlichen Mobiltelefon über Bluetooth.

Optional kann die erste Startreihenfolge weitere Datendienste aufweisen, beispielsweise einen oder mehrere der folgenden Datendienste:
(7) Datendienst zum Empfang von Kurznachrichten über ein Mobilfunknetz,
(8) Datendienst zum Empfang von Landkartendaten über ein Mobilfunknetz und
(9) Datendienst zum Herstellen einer Verbindung zwischen einer Freisprechanlage des Fahrzeugs und einem im Fahrzeug befindlichen Mobiltelefon über Bluetooth.

Gemäß einer anderen in der Speichereinheit gespeicherten Startreihenfolge soll zuerst der Empfang eines bestimmten Audioprogramms über Rundfunk gestartet werden, dann sollen Veranstaltungsinformationen über ein Mobilfunknetz empfangen werden, anschließend soll ein Telefonbuch aus einem im Fahrzeug befindlichen Mobiltelefon über Bluetooth importiert werden und danach soll der Datendienst zum Empfang von Kurznachrichten über ein Mobilfunknetz gestartet werden.

Gemäß einer weiteren in der Speichereinheit gespeicherten Startreihenfolge soll zuerst ein Update von Landkartendaten über ein Mobilfunknetz gestartet werden, anschließend sollen Verkehrsmeldungen über Rundfunk empfangen werden, dann soll die aktuelle Position des Fahrzeugs bestimmt werden und daraufhin soll ein Navigationsvorgang für eine nach Hause führende Route gestartet werden.

Gemäß einer weiteren in der Speichereinheit gespeicherten Startreihenfolge soll zuerst eine Verbindung zwischen einer Freisprechanlage des Fahrzeugs und demjenigen der im Fahrzeug befindlichen Mobiltelefone über Bluetooth hergestellt werden, mit dem die meisten Gespräche über die Freisprecheinrichtung im Fahrzeug erfolgen. Diese Startreihenfolge kann dann zur Anwendung kommen, wenn sich mehrere Mobiltelefone an Bord des Fahrzeugs befinden.

Bei einer weiteren Ausführungsform der Erfindung sind die Datendienste, die in der ersten Startreihenfolge aufgelistet sind, nicht auf die Datendienste der Navigationseinrichtung beschränkt. Über die Schnittstelleneinheit können weitere Datendienste in die Startreihenfolge aufgenommen werden, die einem weiteren Funktionsmodul im Fahrzeug (nicht gezeigt) oder einem Fahrzeugmodul zugeordnet sind. Gemäß einer weiteren in der Speichereinheit gespeicherten Startreihenfolge soll zum Beispiel eine Rückfahrkamera zuerst gestartet werden.

Die erste Startreihenfolge wird bereits bei der Entwicklung der Navigationseinrichtung 100 festgelegt und bei der Herstellung der Navigationseinrichtung 100 in der Speichereinheit abgelegt. Optional werden neben der ersten Startreihenfolge noch weitere Startreihenfolgen in der Speichereinheit abgelegt.

Optional können die Startreihenfolgen themenbezogene Startreihenfolgen sein, zum Beispiel "Nachrichten und Aktuelles", "Kinderunterhaltung" oder "Sehenswürdigkeiten und Kultur."

Bei einer anderen Ausführungsform der Erfindung legt der Nutzer die erste Startreihenfolge fest, indem er die erste Startreihenfolge aus mehreren Startreihenfolgen auswählt, die in der Speichereinheit vorliegen. Voraussetzung dazu ist, dass die Startreihenfolgen bereits bei der Entwicklung der Navigationseinrichtung erstellt und bei der Herstellung der Navigationseinrichtung in der Speichereinheit abgelegt wurden.

Bei einer weiteren Ausführungsform der Erfindung wird die erste Startreihenfolge von einem Nutzer der Navigationseinrichtung festgelegt, indem der Nutzer eine vorgegebene Standardstartreihenfolge ändert. Dazu zeigt die Navigationseinrichtung dem Nutzer die Standardstartreihenfolge in Form einer Liste auf dem Berührungsbildschirm an. Der Nutzer wählt einen einzelnen Datendienst aus der Standardstartreihenfolge aus und ordnet diesen in der Liste anders an. Beispielsweise verschiebt der Nutzer einen Datendienst an die erste Position der Liste. Dies bedeutet, dass beim Aufstarten der Navigationseinrichtung dieser Datendienst die höchste Priorität aller zu ladenden und zu startenden Datendienste aufweisen soll und folglich als erster Datendienst gestartet werden soll, d.h. vor den Datendiensten, die in der Liste auf den ersten Datendienst folgen.

Bei noch einer weiteren Ausführungsform der Erfindung hat der Nutzer die Möglichkeit, Datendienste aus einer Startreihenfolge zu entfernen oder zu einer Startreihenfolge hinzuzufügen. Bei noch einer weiteren Ausführungsform der Erfindung kann der Nutzer Datendienste aus einer Mehrzahl von Datendiensten auswählen und zu einer Startreihenfolge zusammenfügen.

Bei einem dritten Teilschritt 213 wird die erste Startreihenfolge der ersten Situation zugewiesen. Dazu wird eine Verknüpfung zwischen der ersten Startreihenfolge und der ersten Situation erstellt und in der Speichereinheit abgelegt.

Bei einer anderen Ausführungsform der Erfindung wird mehreren der in der Speichereinheit gespeicherten Situationen dieselbe Startreihenfolge zugewiesen.

Im vorliegenden Fall wird die erste Startreihenfolge der ersten Situation bereits bei der Entwicklung der Navigationseinrichtung 100 zugewiesen und bei der Herstellung der Navigationseinrichtung 100 wird eine entsprechende Verknüpfung in der Speichereinheit abgelegt, welche in Figur 1 als Verbindungslinie zwischen "Situation 1" und "Startreihenfolge 1" dargestellt ist. Voraussetzung dafür ist, dass auch die erste Situation und die erste Startreihenfolge bereits bei der Herstellung in der Speichereinheit gespeichert werden. Diese Verfahrensweise hat den Vorteil, dass beim Betrieb der Navigationseinrichtung 100 keinerlei Eingaben des Nutzers zum Zuweisen der ersten Startreihenfolge zu der ersten Situation erforderlich sind.

Bei einer anderen Ausführungsform der Erfindung weist der Nutzer die erste Startreihenfolge der ersten Situation manuell zu. Dazu zeigt die Eingabe- und Ausgabeeinheit dem Nutzer die erste Situation (neben weiteren Situationen) an. Ferner zeigt die Eingabe- und Ausgabeeinheit dem Nutzer die erste Startreihenfolge (neben weiteren Startreihenfolgen) an, zum Beispiel als Aufklappliste (engl. drop-down list). Der Nutzer kann die erste Situation der ersten Startreihenfolge zuweisen, indem er die erste Situation und die erste Startreihenfolge auswählt, zum Beispiel durch Betätigen einer Schaltfläche auf dem Berührungsbildschirm, wodurch eine Verknüpfung der ersten Situation mit der ersten Startreihenfolge erzeugt und in der Speichereinheit abgelegt wird. Nach dem Speichern der Verknüpfung können eine zweite Situation und eine zweite Startreihenfolge auf die gleiche Weise miteinander verknüpft werden, sodass die zweite Startreihenfolge der zweiten Situation zugewiesen wird.

Bei einer weiteren Ausführungsform der Erfindung kann der Nutzer beim manuellen Zuweisen der ersten Startreihenfolge zu der ersten Situation aus einer Mehrzahl von Situationen, die bereits bei der Herstellung in der Speichereinheit gespeichert wurden, und/oder aus einer Mehrzahl von Startreihenfolgen, die bereits bei der Herstellung in der Speichereinheit gespeichert wurden, auswählen und eine Mehrzahl von Verknüpfungen erzeugen. Sind die gewünschten Verknüpfungen erstellt, so kann der Nutzer diese in der Speichereinheit ablegen, zum Beispiel durch Betätigen einer Schaltfläche auf dem Berührungsbildschirm.

Bei einem zweiten Verfahrensschritt 230 wird unter Verwendung der Recheneinheit geprüft, ob die erste Situation vorliegt.

Der zweite Verfahrensschritt wird ausgeführt, sobald die Navigationseinrichtung 100, wie in Teilschritt 220 gezeigt, aktiviert wurde. Unter dem Aktivieren der Navigationseinrichtung 100 ist ein automatisches oder manuelles Versetzen der Navigationseinrichtung 100 aus einem Bereitschaftszustand in einen aktiven Betriebszustand zu verstehen. Die Navigationseinrichtung 100 kann durch Betätigen einer Taste der Eingabe-/Ausgabeeinheit manuell in einen aktiven Betriebszustand versetzt werden. Alternativ dazu kann die Navigationseinrichtung aktiviert werden, indem die Navigationseinrichtung aus einem stromlosen Zustand in einen aktiven Betriebszustand versetzt wird.

Bei dem zweiten Verfahrensschritt prüft die Recheneinheit, ob der Situationsparameter der ersten Situation vorliegt. Dazu prüft die Recheneinheit, ob der Situationsparameter des ersten Situationsparameterschemas vorliegt. Mit anderen Worten prüft die Recheneinheit, ob der Situationsparameter der ersten Situation in den Fahrzeugdaten, die der Recheneinheit mittels der Schnittstelleneinheit zugänglich sind, vorliegt.

Ergibt die Prüfung, dass der Situationsparameter der ersten Situation vorliegt, so wird davon ausgegangen, dass die erste Situation vorliegt.

Im vorliegenden Fall ergibt die Prüfung, dass der Situationsparameter der ersten Situation, "Rücksitzbank belegt", vorliegt. Die Recheneinheit geht somit davon aus, dass die erste Situation vorliegt.

Das Prüfungsergebnis bewirkt, dass ein dritter Verfahrensschritt 240a ausgeführt wird, bei dem die Datendienste unter Verwendung der Recheneinheit in der ersten Startreihenfolge, die der ersten Situation zugewiesen wurde, gestartet werden. Mit anderen Worten priorisiert die Recheneinheit die zu startenden Datendienste gemäß der ersten Startreihenfolge. Nach dem Starten der Datendienste wird das Verfahren beendet (Verfahrensschritt 250). Bei einem erneuten Aktivieren der Navigationseinrichtung würden die Verfahrensschritte 230 bis 250 erneut ausgeführt.

Hätte die Prüfung dagegen ergeben, dass der Situationsparameter der ersten Situation nicht vorliegt, würde der dritte Verfahrensschritt 240a nicht ausgeführt. Stattdessen würde die Recheneinheit prüfen, ob eine weitere Situation festgelegt ist, d.h. in der Speichereinheit gespeichert ist, wie in Verfahrensschritt 231 gezeigt.

Wäre keine weitere Situation festgelegt, würde das Verfahren beendet (Verfahrensschritt 250). In diesem Fall würden die Verfahrensschritte 230 bis 250 beim erneuten Aktivieren der Navigationseinrichtung erneut ausgeführt.

Wenn jedoch eine weitere Situation festgelegt wäre, würde die Recheneinheit prüfen, ob die weitere Situation vorliegt, d.h. ob das Situationsparameterschema der weiteren Situation vorliegt, wie in Verfahrensschritt 232 gezeigt. Wäre das der Fall, würden Datendienste in einer Startreihenfolge, welche der weiteren Situation zugewiesen ist, ausgeführt (Verfahrensschritt 240b). Nach dem Starten der Datendienste würde das Verfahren beendet (Verfahrensschritt 250). Bei einem erneuten Aktivieren der Navigationseinrichtung würden die Verfahrensschritte 230 bis 250 erneut ausgeführt.

Würde die Prüfung in Verfahrensschritt 232 dagegen ergeben, dass die weitere Situation nicht vorliegt, würde die Recheneinheit prüfen, ob noch eine weitere Situation festgelegt ist (Verfahrensschritt 231). Danach würde das Verfahren fortgesetzt, wie oben ausgehend von dem Verfahrensschritt 231 beschrieben ist.

Die im vorliegenden Fall vorgenommene Priorisierung erfolgt derart, dass beim Aktivieren der Navigationseinrichtung 100 der "Datendienst zum Empfang eines Audiodatenstroms über ein Mobilfunknetz", dem in der ersten Startreihenfolge der erste Platz zugewiesen wurde, vor allen weiteren zu startenden Datendiensten gestartet wird.

Alternativ dazu erhält der "Datendienst zum Empfang eines Audiodatenstroms über ein Mobilfunknetz" gegenüber den weiteren Datendiensten einen bevorzugten Zugriff auf die Ressourcen der Navigationseinrichtung, zum Beispiel auf den Prozessor und den Arbeitsspeicher der Recheneinheit.

Als eine weitere Alternative kann der "Datendienst zum Empfang eines Audiodatenstroms über ein Mobilfunknetz", im Gegensatz zu den weiteren Datendiensten, einen exklusiven Zugriff auf die Ressourcen der Navigationseinrichtung erhalten. Mit anderen Worten erhält der "Datendienst zum Empfang eines Audiodatenstroms über ein Mobilfunknetz" aufgrund dessen, dass ihm in der ersten Startreihenfolge der erste Platz zugewiesen wurde, exklusiven Zugriff auf die Ressourcen der Navigationseinrichtung. Nachfolgend gestartete Datendienste weisen lediglich nicht-exklusiven Zugriff auf, indem sie zum Beispiel parallel in der Recheneinheit abgearbeitet werden. Die nachfolgend gestarteten Datendienste müssen sich mit anderen Worten die Prozessorleistung und den Arbeitsspeicher mit weiteren Datendiensten und/oder Anwendungen teilen.

Wie oben dargelegt, lädt und startet die Recheneinheit die Datendienste gemäß der der ersten Situation zugewiesenen ersten Startreihenfolge, wie in Teilschritt 240a gezeigt. Dazu wird der "Datendienst zum Empfang eines Audiodatenstroms über ein Mobilfunknetz" als erster Datendienst mit dem ihm zugeteilten Ressourcen initialisiert und gestartet. Wenn der "Datendienst zum Empfang eines Audiodatenstroms über ein Mobilfunknetz" vollständig geladen und gestartet wurde, gibt die Recheneinheit die durch den "Datendienst zum Empfang eines Audiodatenstroms über ein Mobilfunknetz" belegten Ressourcen frei bzw. weist diese dem in der Startreihenfolge auf den "Datendienst zum Empfang eines Audiodatenstroms über ein Mobilfunknetz" folgenden Datendienst zu. Demzufolge wird dann der Datendienst "Datendienst zum Empfang von Wettervorhersagen über Rundfunk" geladen und gestartet.

Läge an Stelle der ersten Situation eine andere Situation vor, würden die Datendienste in der Startreihenfolge priorisiert und gestartet, die der anderen Situation zugewiesenen wurde, wie in Teilschritt 240b gezeigt.

Einer weiteren Situation könnte eine weitere Startreihenfolge zugewiesen sein, gemäß der zunächst der "Datendienst zum Empfang eines Audioprogramms über Rundfunk" gestartet wird, anschließend ein "Datendienst zum Empfangen und Ausgeben von Veranstaltungen in der Region", dann ein "Datendienst zum Importieren eines Telefonbuchs aus einem im Fahrzeug befindlichen Mobiltelefon über Bluetooth" und danach ein "Datendienst zum Empfang von Kurznachrichten über ein Mobilfunknetz".

Einer anderen Situation könnte eine andere Startreihenfolge zugewiesen sein, gemäß der zunächst der "Datendienst zum Empfang von Landkartendaten über ein Mobilfunknetz" gestartet wird, anschließend der "Datendienst zum Empfang von Verkehrsmeldungen über Rundfunk", dann der "Datendienst zum Empfangen einer aktuellen Position des Fahrzeugs" und danach der "Datendienst zum Durchführen eines Navigationsvorgangs".

Einer noch weiteren Situation könnte noch eine weitere Startreihenfolge zugewiesen sein, gemäß der zunächst der "Datendienst zum Herstellen einer Verbindung zwischen einer Freisprechanlage des Fahrzeugs und einem im Fahrzeug befindlichen Mobiltelefon über Bluetooth" gestartet wird.

Wie oben dargelegt, wird das Verfahren beendet, wie in Verfahrensschritt 250 gezeigt, wenn der letzte Datendienst, der gemäß der ersten Startreihenfolge zu laden und zu starten ist, vollständig geladen und gestartet wurde. Erst nach einem erneuten Aktivieren der Navigationseinrichtung würden die Verfahrensschritte 230 bis 250 erneut ausgeführt.

Bei einer anderen Ausführungsform der Erfindung prüft die Recheneinheit in einem weiteren Schritt (nicht gezeigt), wenn die Prüfung in Verfahrensschritt 231 ergibt, dass keine weitere Situation festgelegt ist, ob sich aus den vorliegenden Fahrzeugdaten ergebende Situationsparameter eine hinreichende Ähnlichkeit zu einer festgelegten Situation bzw. deren Situationsparameterschema aufweisen. Wird eine hinreichende Ähnlichkeit festgestellt, so schlägt die Recheneinheit dem Nutzer vor, die bislang unbekannte Situation zu speichern und mit der Startreihenfolge der ähnlichen Situation zu verknüpfen. Die Recheneinheit kann zudem die Entscheidung des Nutzers, die vorgeschlagene Verknüpfung anzunehmen oder abzulehnen, auswerten, um dadurch die Vorschläge bei zukünftigen unbekannten Situationen an die Vorlieben des Nutzers anzupassen. Die Auswertung kann zum Beispiel mit Hilfe von Fuzzylogik vorgenommen werden.

In einer weiteren Ausführungsform der Erfindung wird ein Verfahren ausgeführt, bei dem bestimmten Situationen eine Abschaltreihenfolge zugewiesen wird, d.h. eine Reihenfolge, in welcher die aktiven Datendienste einer Navigationseinrichtung unterbrochen bzw. beendet werden sollen. Analog zu dem obigen Verfahren beim Aktivieren einer Navigationseinrichtung können für das Abschalten der Datendienste eine oder mehrere Abschaltsituationen vorliegen, welche jeweils ein die jeweilige Abschaltsituation kennzeichnendes Abschaltsituationsparameterschema aufweisen. Ebenso können eine oder mehrere Abschaltreihenfolgen vorliegen, welche vorgeben, in welcher Reihenfolge die aktiven Datendienste unterbrochen bzw. beendet werden sollen.

Dazu wird bei einem ersten Verfahrensschritt eine erste Abschaltreihenfolge von Datendiensten einer ersten Abschaltsituation zugewiesen. Das damit einhergehende Festlegen der ersten Abschaltsituation sowie das Festlegen der ersten Abschaltreihenfolge und das Zuweisen der ersten Abschaltreihenfolge zu der ersten Abschaltsituation entsprechen dem in Figur 2 dargestellten, oben erläuterten Verfahrensschritt 210.

Abschaltsituationen, in denen Datendienste der Navigationseinrichtung unterbrochen oder beendet werden, können vorliegen, wenn
▪ das Fahrzeug mit aktiver Navigationseinrichtung, aber abgeschaltetem Motor abgestellt ist, zum Beispiel im Stau oder während einer Autoverladung,
▪ sich das Fahrzeug an einer Tankstelle befindet und der Tankdeckel geöffnet ist,
▪ die Navigationseinrichtung des Fahrzeugs mittels einer Softwareanwendung und/oder eines Computerprogramms per Fernzugriff aktiviert wurde, um einen Navigationsvorgang auszuführen, oder
▪ eine Fahrzeugbatterie nur noch eine geringe Ladung aufweist.

Bei einem zweiten Verfahrensschritt wird unter Verwendung der Recheneinheit geprüft, ob die erste Abschaltsituation vorliegt. Der zweite Verfahrensschritt wird ausgeführt, sobald die Navigationseinrichtung deaktiviert wurde. Deaktivieren ist hierin als automatisches Versetzen der Navigationseinrichtung aus einem aktiven Betriebszustand in einen Bereitschaftszustand zu verstehen, zum Beispiel wenn ein Kapazitätsgrenzwert einer die Navigationseinrichtung mit elektrischer Energie versorgenden Fahrzeugbatterie erreicht wird. Alternativ kann die Navigationseinrichtung manuell in einen Bereitschaftszustand versetzt werden, zum Beispiel durch Betätigen einer Taste. In einer weiteren Alternative kann die Navigationseinrichtung in einen stromfreien Zustand versetzt werden. Das Prüfen auf Vorliegen einer ersten Abschaltsituation erfolgt analog zu der oben erläuterten Prüfung, ob eine erste Situation vorliegt.

Die Navigationseinrichtung muss aufgrund einer Situation, in welcher sich das Fahrzeug befindet, nicht komplett deaktiviert werden. Vielmehr können ein oder mehrere Datendienste in aktivem Zustand verbleiben, zum Beispiel der Datendienst zum Empfang eines Audioprogramms über Rundfunk.

Wenn die erste Abschaltsituation vorliegt, wird ein dritter Verfahrensschritt ausgeführt, bei dem die Datendienste unter Verwendung der Recheneinheit in der ersten Abschaltreihenfolge, die der ersten Abschaltsituation zugewiesen wurde, abgeschaltet werden. Wenn dagegen die erste Abschaltsituation nicht vorliegt, wird geprüft, ob eine weitere Abschaltsituation festgelegt ist. Wenn das der Fall ist, wird geprüft, ob die weitere Abschaltsituation vorliegt. In diesem Fall werden die Datendienste in der weiteren Abschaltreihenfolge unterbrochen oder beendet. Dies erfolgt analog zum oben erläuterten Starten der Datendienste beim Aktivieren einer Navigationseinrichtung.

Die Abschaltreihenfolge kann dabei aufsteigend oder absteigend abgearbeitet werden.

Gemäß einer in einer Speichereinheit gespeicherten Abschaltreihenfolge wird zunächst ein "Datendienst für einen Navigationsvorgang" beendet, dann der "Datendienst zum Ermitteln der aktuellen Position des Fahrzeugs", danach der "Datendienst zum Empfang von Wettervorhersagen über Rundfunk." Nur der "Datendienst zum Empfang eines Audioprogramms über Rundfunk" und der "Datendienst zum Empfang von Verkehrsmeldungen über Rundfunk" bleiben aktiv.

Eine weitere in der Speichereinheit gespeicherte Abschaltreihenfolge weist an erster Stelle den "Datendienst für einen Navigationsvorgang" auf. Die weitere Abschaltreihenfolge ist zudem ausgebildet, in absteigender Reihenfolge ausgeführt zu werden, d.h. der "Datendienst für einen Navigationsvorgang" wird als letzter beendet. Der "Datendienst für einen Navigationsvorgang" kann demzufolge Daten in einen Arbeitsspeicher einer Recheneinheit ablegen, die beim Aufstarten der Navigationseinrichtung sofort zur Verfügung stehen.

## Patentansprüche

1. Verfahren zum Starten von Datendiensten einer Navigationseinrichtung (100) eines Fahrzeugs, welche eine Recheneinheit aufweist, mit den Schritten:
• Zuweisen einer ersten Startreihenfolge, in der Datendienste der Navigationseinrichtung (100) gestartet werden können, zu einer ersten Situation, in welcher sich das Fahrzeug befinden kann,
• Zuweisen einer zweiten Startreihenfolge, in der Datendienste der Navigationseinrichtung (100) gestartet werden können, zu einer zweiten Situation, in welcher sich das Fahrzeug befinden kann,
und, wenn die Navigationseinrichtung (100) aktiviert wird,
• Prüfen, ob die erste Situation vorliegt, unter Verwendung der Recheneinheit, indem die Recheneinheit Fahrzeugdaten auswertet, welche die erste Situation kennzeichnen, und, wenn die erste Situation vorliegt, Starten der Datendienste in der ersten Startreihenfolge unter Verwendung der Recheneinheit, und,
• wenn die erste Situation nicht vorliegt, Prüfen, ob die zweite Situation vorliegt, unter Verwendung der Recheneinheit, indem die Recheneinheit Fahrzeugdaten auswertet, welche die zweite Situation kennzeichnen, und, wenn die zweite Situation vorliegt, Starten der Datendienste in der zweiten Startreihenfolge unter Verwendung der Recheneinheit.

2. Verfahren gemäß Anspruch 1,
bei dem die Fahrzeugdaten von einem Sensor zu einem Steuergerät des Fahrzeugs transportiert werden.

3. Verfahren gemäß einem der Ansprüche 1 und 2,
bei dem die Fahrzeugdaten
• die Belegung einer Rücksitzbank bzw. eines Rücksitzes des Fahrzeugs,
• eine Position, an der das Fahrzeug abgestellt ist,
• eine Ausrichtung, in der das Fahrzeug abgestellt ist,
• eine Beladung des Fahrzeugs,
• das Vorhandensein eines personalisierten Fahrzeugschlüssels, mit welchem das Fahrzeug geöffnet bzw. gestartet wird, oder
• das Vorhandensein eines mobilen Kommunikationsgeräts und/oder eines mobilen Medienwiedergabegeräts an Bord des Fahrzeugs betreffen.

4. Verfahren gemäß einem der vorhergehenden Ansprüche,
bei dem die erste Startreihenfolge von einem Nutzer unter Verwendung einer Ein- und Ausgabeeinheit der Navigationseinrichtung (100) festgelegt wird.

5. Verfahren gemäß Anspruch 4,
bei dem der Nutzer die erste Startreihenfolge festlegt, indem er die erste Startreihenfolge aus mehreren Startreihenfolgen auswählt oder mehrere Datendienste in der ersten Startreihenfolge anordnet.

6. Verfahren gemäß einem der vorhergehenden Ansprüche,
bei dem die erste Situation von einem Nutzer unter Verwendung einer Ein- und Ausgabeeinheit der Navigationseinrichtung (100) festgelegt wird.

7. Verfahren gemäß Anspruch 6,
bei dem der Nutzer die erste Situation festlegt, indem er die erste Situation aus mehreren Situationen auswählt oder die erste Situation unter Verwendung eines Situationsparameters oder mehrerer Situationsparameter definiert.

8. Verfahren gemäß einem der vorhergehenden Ansprüche,
bei dem das Zuweisen der ersten Startreihenfolge zu der ersten Situation von einem Nutzer unter Verwendung einer Ein- und Ausgabeeinheit der Navigationseinrichtung (100) vorgenommen wird.

9. Verfahren gemäß einem der vorhergehenden Ansprüche,
bei dem die erste Situation durch einen Situationsparameter oder durch mehrere Situationsparameter gekennzeichnet ist und beim Prüfen, ob die erste Situation vorliegt, geprüft wird, ob der Situationsparameter vorliegt bzw. ob die Situationsparameter vorliegen.

10. Navigationseinrichtung (100) eines Fahrzeugs mit:
• einer Speichereinheit, in der eine erste Startreihenfolge, in der Datendienste der Navigationseinrichtung (100) gestartet werden können, eine erste Situation, in welcher sich das Fahrzeug befinden kann, eine Verknüpfung der ersten Startreihenfolge mit der ersten Situation, eine zweite Startreihenfolge, in der Datendienste der Navigationseinrichtung (100) gestartet werden können, eine zweite Situation, in welcher sich das Fahrzeug befinden kann, und eine Verknüpfung der zweiten Startreihenfolge mit der zweiten Situation gespeichert sind, und
• einer Recheneinheit, die eingerichtet ist, wenn die Navigationseinrichtung (100) aktiviert wird, zu prüfen, ob die erste Situation vorliegt, indem die Recheneinheit Fahrzeugdaten auswertet, welche die erste Situation kennzeichnen, und, wenn die erste Situation vorliegt, die Datendienste in der ersten Startreihenfolge zu starten, und, wenn die erste Situation nicht vorliegt, zu prüfen, ob die zweite Situation vorliegt, indem die Recheneinheit Fahrzeugdaten auswertet, welche die zweite Situation kennzeichnen, und, wenn die zweite Situation vorliegt, die Datendienste in der zweiten Startreihenfolge zu starten.

## Claims

1. Method for starting data services of a navigation device (100) of a vehicle having a computing unit comprising the steps:
- allocating a first starting sequence in which data services of the navigation device (100) may be started to a first situation in which the vehicle may be situated,
- allocating a second starting sequence in which data services of the navigation device (100) may be started to a second situation in which the vehicle may be situated,
and, when the navigation device (100) is activated,
- checking if the first situation is present by using the computing unit, whereby the computing unit evaluates vehicle data which characterize the first situation, and, if the first situation is present, starting the data services in the first starting sequence by using the computing unit, and,
- if the first situation is not present, checking if the second situation is present by using the computing unit, whereby the computing unit evaluates vehicle data which characterize the second situation, and, if the second situation is present, starting the data services in the second starting sequence by using the computing unit.

2. Method according to claim 1,
by which the vehicle data are transported from a sensor to a control unit of the vehicle.

3. Method according to one of the claims 1 and 2,
by which the vehicle data concern
- the occupancy of a back seat bench respectively a rear seat of the vehicle,
- a position, where the vehicle is parked,
- an alignment, in which the vehicle is parked,
- a loading of the vehicle,
- the presence of a personalized vehicle key, by which the vehicle is opened respectively started, or
- the presence of a mobile communication device and/or a mobile media player device on board of the vehicle.

4. Method according to one of the proceeding claims,
by which the first starting sequence is determined by a user by using an input- and output device of the navigation device (100).

5. Method according to claim 4,
by which the user determines the first starting sequence by selecting the first starting sequence out of several starting sequences or arranging several data services in the first starting sequence.

6. Method according to one of the proceeding claims,
by which the first situation is determined by a user by using an input- and output device of the navigation device (100).

7. Method according to claim 6,
by which the user determines the first situation by selecting the first situation out of several situations or defining the first situation by using a situation parameter or several situation parameters.

8. Method according to one of the proceeding claims,
by which the allocating of the first starting sequence to the first situation is made by a user by using an input- and output device of the navigation device (100).

9. Method according to one of the proceeding claims,
by which the first situation is **characterized by** a situation parameter or by several situation parameters and at checking, if the first situation is present, is checked, if the situation parameter is present respectively if the situation parameters are present.

10. Navigation device (100) of a vehicle having:
- a memory unit, in which a first starting sequence, in which data services of the navigation device (100) may be started, a first situation, in which the vehicle may be situated, a linkage of the first starting sequence with the first situation, a second starting sequence, in which data services of the navigation device (100) may be started, a second situation, in which the vehicle may be situated, and a linkage of the second starting sequence with the second situation are stored, and
- a computing unit, which is configured to check when the navigation device (100) is activated if the first situation is present, whereby the computing unit evaluates vehicle data which characterize the first situation, and, if the first situation is present, to start the data services in the first starting sequence, and, if the first situation is not present, to check if the second situation is present, whereby the computing unit evaluates vehicle data which characterize the second situation, and, if the second situation is present, to start the data services in the second starting sequence.

## Revendications

1. Procédé permettant de démarrer les services de données d'un dispositif de navigation (100) d'un véhicule, comportant une unité de calcul, les étapes du procédé consistant :
• à affecter un premier ordre chronologique de démarrage, dans lequel les services de données du dispositif de navigation (100) peuvent être démarrés, à une première situation dans laquelle le véhicule peut se trouver,
• à affecter un deuxième ordre chronologique de démarrage, dans lequel les services de données du dispositif de navigation (100) peuvent être démarrés, à une deuxième situation dans laquelle le véhicule peut se trouver,
et, à l'activation du dispositif de navigation (100),
• à vérifier si la première situation se présente, en utilisant l'unité de calcul pour évaluer les données du véhicule, qui caractérisent la première situation, et, si la première situation se présente, à démarrer les services de données dans le premier ordre chronologique de démarrage en utilisant l'unité de calcul, et,
• si la première situation ne se présente pas, à vérifier si la deuxième situation se présente en utilisant l'unité de calcul pour évaluer les données du véhicule qui caractérisent la deuxième situation, et, si la deuxième situation se présente, à démarrer les services de données dans le deuxième ordre chronologique de démarrage en utilisant l'unité de calcul.

2. Procédé selon la revendication 1,
**caractérisé en ce que** les données du véhicule sont communiquées à une unité de commande du véhicule par un capteur.

3. Procédé selon l'une des revendications 1 et 2,
**caractérisé en ce que** les données du véhicule se rapportent
• à l'occupation d'une banquette arrière ou d'un siège arrière du véhicule,
• à une position de stationnement du véhicule,
• à une orientation du véhicule stationné,
• à un chargement du véhicule,
• à la présence d'une clé personnalisée du véhicule, utilisée pour ouvrir et démarrer le véhicule, ou
• à la présence d'un équipement mobile de communication et/ou d'un équipement mobile de retransmission de médias se trouvant à bord du véhicule.

4. Procédé selon l'une des revendications précédentes,
**caractérisé en ce que** le premier ordre chronologique de démarrage est défini par un utilisateur avec une unité d'entrée et de sortie du dispositif de navigation (100).

5. Procédé selon la revendication 4,
**caractérisé en ce que** l'utilisateur définit le premier ordre chronologique de démarrage en sélectionnant le premier ordre chronologique de démarrage parmi plusieurs ordres chronologiques de démarrage ou en disposant plusieurs services de données dans le premier ordre chronologique de démarrage.

6. Procédé selon l'une des revendications précédentes,
**caractérisé en ce que** la première situation est définie par un utilisateur avec une unité d'entrée et de sortie du dispositif de navigation (100).

7. Procédé selon la revendication 6,
**caractérisé en ce que** l'utilisateur définit la première situation en sélectionnant la première situation parmi plusieurs situations ou en définissant la première situation en utilisant un ou plusieurs paramètres de situation.

8. Procédé selon l'une des revendications précédentes,
**caractérisé en ce que** le premier ordre chronologique de démarrage est affecté à la première situation par un utilisateur avec une unité d'entrée et de sortie du dispositif de navigation (100).

9. Procédé selon l'une des revendications précédentes,
**caractérisé en ce que** la première situation est **caractérisée par** un ou plusieurs paramètres de situation et que, lors du contrôle de la présence de la première situation, la présence du ou des paramètres de situation est vérifiée.

10. Dispositif de navigation (100) d'un véhicule, comprenant :
• une unité mémoire dans laquelle sont enregistrés un premier ordre chronologique de démarrage dans lequel les services de données du dispositif de navigation (100) peuvent être démarrés, une première situation dans laquelle le véhicule peut se trouver, un lien affectant le premier ordre chronologique de démarrage à la première situation, un deuxième ordre chronologique de démarrage dans lequel les services de données du dispositif de navigation (100) peuvent être démarrés, une deuxième situation dans laquelle le véhicule peut se trouver, et un lien affectant le deuxième ordre chronologique de démarrage à la deuxième situation, et
• une unité de calcul configurée de manière à vérifier à l'activation du dispositif de navigation (100) si la première situation se présente, en évaluant les données du véhicule qui caractérisent la première situation, et, si la première situation se présente, à démarrer les services de données dans le premier ordre chronologique de démarrage, et, si la première situation ne se présente pas, à vérifier si la deuxième situation se présente, en évaluant les données du véhicule qui caractérisent la deuxième situation, et, si la deuxième situation se présente, à démarrer les services de données dans le deuxième ordre chronologique de démarrage.
